# EUROPÄISCHE PATENTSCHRIFT

(11) **EP 3 968 052 B1**
(45) Veröffentlichungstag und Bekanntmachung des Hinweises auf die Patenterteilung: **16.10.2024**
(21) Anmeldenummer: 21191017.9
(22) Anmeldetag: 12.08.2021
(51) Int. Cl.: G01S 13/08, G01S 7/03, G01S 13/88, G01D 5/48

(54) **MESSSYSTEM, SCHIEBER MIT EINEM DERARTIGEN MESSSYSTEM UND VERFAHREN ZUM MESSEN DER POSITION EINES SCHIEBERS**
MEASURING SYSTEM, SLIDER WITH SUCH A MEASURING SYSTEM AND METHOD FOR MEASURING THE POSITION OF A SLIDER
SYSTÈME DE MESURE, VANNE DOTÉE D'UN TEL SYSTÈME DE MESURE ET PROCÉDÉ DE MESURE DE LA POSITION D'UNE VANNE

(30) Priorität: 11.09.2020 DE 102020123770
(43) Veröffentlichungstag der Anmeldung: 16.03.2022
(73) Patentinhaber: Z & J Technologies GmbH, 52355 Düren (DE)
(72) Erfinder: RÜHE, Andreas, 52372 Kreuzau (DE); BREUER, Holger, 52393 Hürtgenwald (DE); BRAUN, Alexander, 52355 Düren-Kufferath (DE)
(74) Vertreter: Meissner Bolte Partnerschaft mbB

(56) Entgegenhaltungen:
- DE-A1- 102013 108 490
- DE-A1- 102018 218 150
- DE-T2- 60 205 473
- US-A1- 2005 241 391

## Beschreibung

Die Erfindung betrifft ein Messsystem für industrielle Armaturen, insbesondere für Anlagen in den Bereichen Chemie, Petrochemie, Eisen- oder Stahlherstellung, Glasherstellung oder Energie- und Umwelttechnik, zur Messung der Position eines bewegbaren Bauteils der Armatur. Messsysteme nach dem Oberbegriff des Anspruchs 1 sind aus der Praxis in der Form von magnetostriktiven Messsystemen bekannt, die zur Positionsmessung bewegter Bauteile im Anlagenbau eingesetzt werden. Die Erfindung betrifft ferner einen Schieber mit einem derartigen Messsystem sowie ein Verfahren zum Messen der Position eines Schiebers.

Bei industriellen Armaturen ist es häufig erforderlich, dass die Position linear bewegter Bauteile, insbesondere von Schiebern bekannt ist. Dabei wird gemessen, ob der Schieber vollständig geschlossen oder vollständig offen oder in einer Zwischenposition angeordnet ist. Die bisher eingesetzten magnetostriktiven Messsysteme sind vibrationsanfällig und können zu ungenauen Ergebnissen führen.

Der Erfindung liegt die Aufgabe zugrunde, ein Messsystem für industrielle Armaturen anzugeben, dass möglichst robust und einfach aufgebaut ist. Der Erfindung liegt ferner die Aufgabe zugrunde, einen Schieber mit einem derartigen Messsystem und ein Verfahren zum Messen der Position eines Schiebers anzugeben.

Erfindungsgemäß wird diese Aufgabe mit Blick auf das Messsystem für industrielle Armaturen durch den Gegenstand des Anspruchs 1 gelöst. Mit Blick auf den Schieber wird die Aufgabe durch den Gegenstand des Anspruchs 8 und mit Blick auf das Verfahren durch den Gegenstand des Anspruchs 10 gelöst.

Konkret wird die Aufgabe durch ein Messsystem für einen Schieber für industrielle Anlagen gelöst, der insbesondere für Anlagen in den Bereichen Chemie, Petrochemie, Eisen- oder Stahlherstellung, Glasherstellung oder Energie- und Umwelttechnik geeignet ist, wobei das Messsystem zur Messung der Position eines linear bewegbaren Bauteils des Schiebers angepasst ist. Das Messsystem weist eine Meßvorrichtung zum Senden und Empfangen von Radarsignalen auf, das mit einer Sonde zum Führen der Radarsignale verbunden ist. Ein Reflexionselement ist in der Sonde geführt und mit dem bewegbaren Bauteil des Schiebers derart koppelbar, dass eine Position des Bauteils einer Position des Reflexionselements in der Sonde entspricht.

Mit anderen Worten wird eine Veränderung der Position des Bauteils auf die Position des Reflexionselements in der Sonde übertragen, sodass sich die Lage des Reflexionselements in der Sonde entsprechend ändert. Die Lage des Reflexionselements in der Sonde lässt sich durch das Radarsignal, das am Reflexionselements reflektiert wird, bestimmen. Dadurch kann auf die jeweilige Position des Bauteils rückgeschlossen werden. Dabei wird der Abstand zwischen der Messvorrichtung, die die Radarsignale sendet und empfängt und dem Reflexionselements verändert. Die Laufzeit der reflektierten Radarsignale wird erfasst und ausgewertet. Durch die Wegänderung ändert sich die Laufzeit, wodurch auf die Position des Reflexionselements in der Sonde und somit auf die Position des Bauteils geschlossen werden kann. Die Messvorrichtung bzw. das Messsystem funktionieren nach dem Prinzip der Zeitbereichsreflektometrie, die auch als geführtes Radar oder Time Domain Reflectometry, kurz TDR bezeichnet wird. Diese an sich bekannte Technologie hat den Vorteil, dass diese unempfindlich gegen Vibrationen ist und einen einfachen Meßaufbau ermöglicht.

Das Messsystem ist zur Messung linearer Bewegungen an industriellen Armaturen geeignet.

Zwar ist die Zeitbereichsreflektometrie aus der Elektrotechnik zur Messung von Kabellängen oder Störstellen in elektrischen Leitungen bekannt. Die Zeitbereichsreflektometrie wird auch bei Füllstandmessumformern, also zur Messung der Füllständen von Flüssigkeits- oder Schüttgutbehältern eingesetzt. Dabei spielen andere Anforderungen, wie die Temperatur, Dichte oder Zusammensetzung der im Zusammenhang mit der Messung vorliegenden Materialien eine Rolle. Die bekannten Messsysteme lassen sich nicht ohne weiteres im Anlagenbau einsetzen.

Überraschenderweise hat sich gezeigt, dass sich modifizierte Messsysteme aus der Füllstandsmessgerätetechnik (wie beispielsweise in DE 10 2018 21850 A1 offenbart) zur Messung der Position bewegbarer Bauteile im Anlagenbau einsetzen lassen und Vorteile bei den im Anlagenbau auftretenden mechanischen Belastungen, wie beispielsweise Vibrationen mit sich bringen. Konkret ist im Rahmen der Erfindung die Sonde mit dem darin geführten Reflexionselement ausgestattet, das zur Erfassung der Position des bewegbaren Bauteils mit diesem koppelbar ist. Die Messvorrichtung zum Senden und Empfangen der Radarsignale kann aus der Füllstandsmessgerätetechnik übernommen werden. Bevorzugte Ausführungsformen der Erfindung sind in den Unteransprüchen angegeben.

So kann das Reflexionselement zur Erzeugung eines Kontaktes, insbesondere eines elektrischen Kontaktes angepasst sein. Der Kontakt ist dabei permanent, also andauernd während der Messung. Dadurch wird eine starke, insbesondere vollständige Reflexion der Radarsignale erreicht. Das Reflexionselement ändert im Betrieb zusammen mit dem bewegbaren Bauteil seine Position in der Sonde. Der Kontaktbereich, der durch das Reflexionselement erzeugt wird, wandert dabei in der Sonde mit, sodass die Änderung der Wegstrecke zwischen dem Reflexionselement und der Messvorrichtung zum Senden und Empfangen der Radarsignale erfasst wird.

Bei einer weiteren bevorzugten Ausführungsform weist die Sonde ein Außenrohr auf, in dem das Reflexionselement geführt ist. Diese Ausgestaltung der Sonde ist einfach und robust.

Das Außenrohr kann eine seitliche Öffnung, insbesondere einen Längsschlitz aufweisen, durch den das Reflexionselement mit dem bewegbaren Bauteil koppelbar ist. Dadurch können lineare Bewegungen des zu messenden Bauteils übertragen und einfach erfasst werden.

Bei einer weiteren Ausführungsform weist die Sonde ein Führungselement für das Reflexionselement, insbesondere ein Innenrohr auf, dass im Außenrohr angeordnet ist. Das Reflexionselement kann sich entlang des Führungselements bewegen.

Vorzugsweise verbindet das Reflexionselement das Führungselement und das Außenrohr zur Erzeugung des Kontaktes elektrisch. Das Führungselement hat dabei die Doppelfunktion, einerseits das Reflexionselement im Außenrohr zu führen und andererseits den elektrischen Kontakt durch das Reflexionselement herzustellen. Andere Ausführungsformen, bei denen eine Funktionstrennung zwischen Führung und Kontakterzeugung erfolgt, sind möglich. Die vorliegende Ausführungsform hat den Vorteil, dass diese einfach aufgebaut und sehr robust ist, sodass die Position des Bauteils auch unter schwierigen Bedingungen sicher erfasst werden kann.

Bei einer weiteren bevorzugten Ausführungsform weist das Reflexionselement einen Außendurchmesser auf, der dem Innendurchmesser des Außenrohres entspricht. Das Reflexionselement weist einen Innendurchmesser auf, der dem Außendurchmesser des Führungselements entspricht. Das Reflexionselement ist also bündig im Außenrohr angeordnet und liegt zudem am Innenrohr an, wodurch einerseits eine sichere Führung und andererseits der gewünschte elektrische Kontakt ermöglicht wird.

Der erfindungsgemäße Schieber für industrielle Anlagen, insbesondere in den Bereichen Chemie, Petrochemie, Eisen- oder Stahlherstellung, Glasherstellung oder Energie- und Umwelttechnik weist ein Messsystem mit den Merkmalen des Anspruchs 1 auf. Mit anderen Worten ist der Schieber mit einem derartigen Messsystem ausgestattet. Bei dem Schieber ist das bewegbaren Bauteil als Schieberplatte ausgebildet, die mit dem Reflexionselement des Messsystems derart gekoppelt ist, dass eine Bewegung der Schieberplatte auf das Reflexionselement übertragbar ist. Die Übertragung der Bewegung kann direkt oder indirekt erfolgen.

Bei einer bevorzugten Ausführungsform des Schiebers weist die Schieberplatte eine Antriebsstange auf, die beispielsweise als Antriebsspindel oder Antriebszylinder ausgebildet sein kann. Die Antriebsstange ist mit dem Reflexionselement verbunden. Bei der Betätigung der Schieberplatte durch die Antriebsstange ändert diese zwangsläufig zusammen mit der Schieberplatte ihre Position, sodass durch Messung der Position der Antriebsstange auf die Position der Schieberplatte rückgeschlossen werden kann. Im Fall der Antriebsspindel ist die Positionsänderung gleichbedeutend mit der Anzahl der Umdrehungen der Spindelmutter.

Bei dem erfindungsgemäßen Verfahren zum Messen der Position eines bewegbaren Bauteils eines Schiebers, insbesondere für Anlagen in den Bereichen Chemie, Petrochemie, Eisen- oder Stahlherstellung, Glasherstellung oder Energie- und Umwelttechnik, wird die Position des Bauteils nach dem Prinzip der Zeitbereichsreflektometrie gemessen.

Die Erfindung wird anhand eines Ausführungsbeispiels unter Bezug auf die beigefügten schematischen Zeichnungen mit weiteren Einzelheiten näher erläutert.

In diesen zeigen
- Fig. 1: eine schematische Darstellung eines erfindungsgemäßen Ausführungsbeispiels eines Messsystems, das mit einer industriellen Armatur gekoppelt ist;
- Fig. 2: eine perspektivische Ansicht des Messsystems und der Armatur nach Fig. 1, wobei das Messsystem in zwei verschiedenen Messstellungen gezeigt ist
- Fig. 3: die untere der beiden Messstellungen gemäß Fig. 2 im Detail und
- Fig. 4: die obere der beiden Messstellungen gemäß Fig. 2 im Detail.

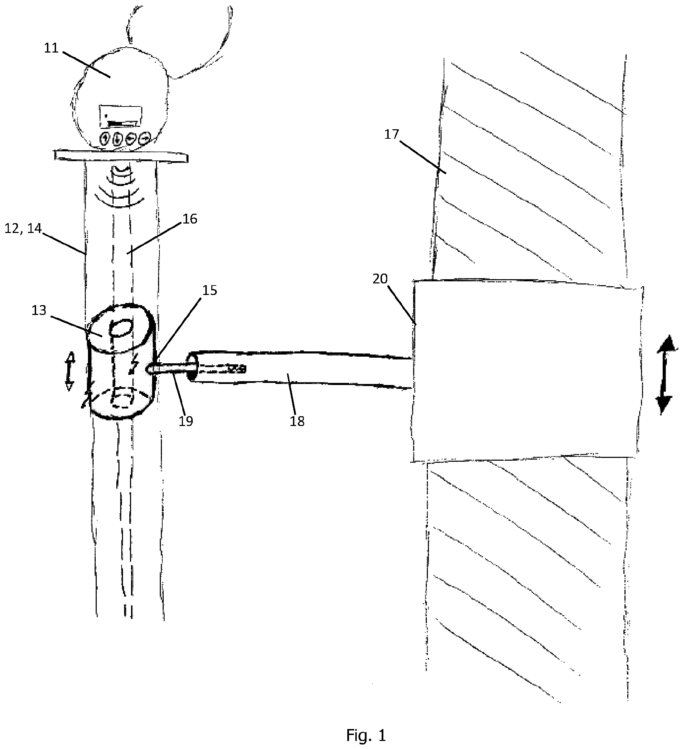

Das in den Figuren 1 bis 4 gezeigte Messsystem kann beispielsweise für Absperrschieber, insbesondere Keil-im-Keil-Absperrschieber, für Doppelplatten-Leitrohrschieber oder Einplatten- und Doppelplatten Regelschieber verwendet werden. Anderer Anwendungsformen im Anlagenbau bzw. bei Armaturen für industrielle Anlagen sind möglich. Generell können derartige Schieber in Ethylen Steam Crackern, Dehydrieranlagen, Fuidized Catalytic Cracking (FCC) Anlagen oder bei Delayed Cokern eingesetzt werden.

Das Messsystem ist zur Messung der Position eines bewegbaren Bauteils 10 der Armatur angepasst und geeignet. Das bewegbaren Bauteil 10 kann beispielsweise eine Schieberplatte sein (nicht gezeigt), die mit einer Antriebsstange 17 verbunden ist. Im Beispiel gemäß Fig. 1 ist die Antriebsstange 17 als Spindel ausgeführt, die die Schieberplatte antreibt. Das Messsystem weist eine Messvorrichtung 11 zum Senden und Empfangen von Radarsignale auf. Im Beispiel gemäß Fig. 1 wird eine an sich bekannte Messvorrichtung 11 verwendet, die deshalb nicht näher beschrieben wird. Die Messvorrichtung 11 ist jedenfalls dazu geeignet, die Position eines nachstehend näher beschriebenen Reflexionselement 13 nach dem Prinzip der Zeitbereichsreflektometrie zu erfassen. Dazu ist die Messvorrichtung 11 mit einer Sonde 12 verbunden, die in dem Beispiel gemäß Fig. 1 als Außenrohr 14 ausgeführt ist. Andere Formen der Sonde 12 sind möglich. Wie in Fig. 1 gezeigt, werden die von der Messvorrichtung emittierten Radarsignale in die Sonde 12 eingekoppelt und entlang der Sonde 12 geführt. Das Reflexionselement 13 ist im Beispiel gemäß Fig. 1 als zylindrisches Rundelement ausgeführt, dass aus einem elektrisch leitenden Material, beispielsweise aus Messing oder einem anderen geeigneten Material hergestellt ist. Das Reflexionselement 13 kann eine andere Form aufweisen, die dazu geeignet ist, in der Sonde geführt zu werden.

Das Reflexionselement 13 ist in Axialrichtung der Sonde 12 hin und her bewegbar, wie durch den parallel zur Längsachse der Sonde verlaufenden Doppelpfeil auf Höhe des Reflexionselements 13 verdeutlicht. Das Reflexionselement 13 kann auch als Gleitstein oder Gleitelement bezeichnet werden. In der Sonde 12, bzw. im Außenrohr 14 ist ein Führungselement 16 angeordnet. Das Führungselement 16 ist im Beispiel gemäß Fig. 1 als Innenrohr ausgeführt. Es ist auch möglich, eine Innenstange oder ein anderes Führungselement zu verwenden. Im Beispiel gemäß Fig. 1 sind das Außenrohr 14 und das Führungselement 16 koaxial angeordnet. Eine andere Anordnung ist möglich. Das Reflexionselement 13 weist eine Längsbohrung auf, in der das Führungselement 16 angeordnet ist. Dadurch lässt sich das Reflexionselement 13 entlang des Führungselements 16 in der Sonde verschieben.

Zur Kopplung des Reflexionselements 13 mit der Antriebsstange 17 weist die Sonde 12, insbesondere das Außenrohr 14 eine seitliche Öffnung 15 auf, die im Beispiel gemäß Fig. 1 als Längsschlitz ausgebildet ist. Der Längsschlitz erstreckt sich parallel zur Längsachse der Sonde. Wie in Fig. 1 gezeigt, ist die Sonde parallel zu Antriebsstange 17 angeordnet, wobei der Längsschlitz der Antriebsstange 17 zugewandt bzw. gegenüber angeordnet ist.

Die mechanische Verbindung zwischen dem Reflexionselement 13 und der Antriebsstange 17 erfolgt durch einen Stift 19, der mit einem Zeiger 18 verbunden ist. Der Stift 19 ist seitlich mit dem Reflexionselement 13 verbunden und erstreckt sich durch den Längsschlitz. Der Zeiger 18 ist mit einem Stellring 20 verbunden, der auf der Antriebsstange 17 angeordnet ist. Bei einer Bewegung der Antriebsstange 17 in Längsrichtung wird der Stellring 20 zwangsweise mitgenommen. Dies ist durch den Doppelpfeil neben dem Stellring 20 in Fig. 1 gezeigt. Wie in Fig. 1 weiter zu sehen, ist zwischen dem Stift 19 und dem Zeiger 18 eine Druckfeder angeordnet.

Mit dieser Anordnung wird die Bewegung, insbesondere Drehbewegung der Spindel bzw. allgemein der Antriebsstange 17 auf das Reflexionselement 13 übertragen. Dadurch wird die Position der Schieberplatte mit der Position des Reflexionselements 13 in der Sonde 12 korreliert.

In Fig. 1 ist weiter zu sehen, dass das Reflexionselement 13 zwischen dem Außenrohr 14 und dem Führungselement 16 einen Kontakt erzeugt und zwar einen permanenten Kontakt. Durch den Kontakt wird erreicht, dass die von der Messvorrichtung 11 emittierten Radarsignale gut reflektiert werden (Totalreflexion). Der Bereich, in dem der Kontakt erzeugt wird, wandert bei einer Bewegung des Reflexionselements 13 entlang der Sonde mit, sodass die dabei sich ergebende Änderung der Wegstrecke für die Radarsignale erfasst wird.

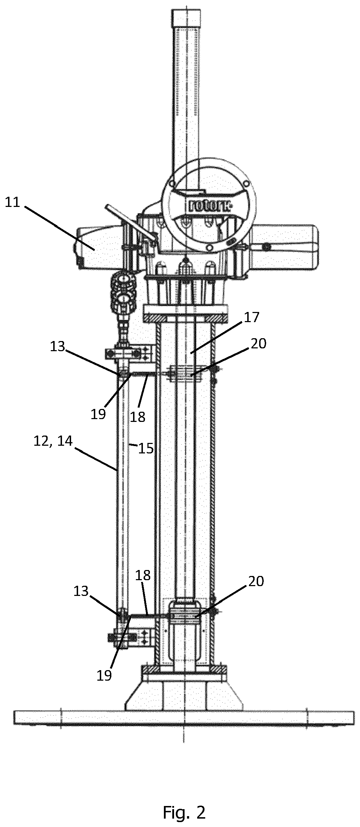

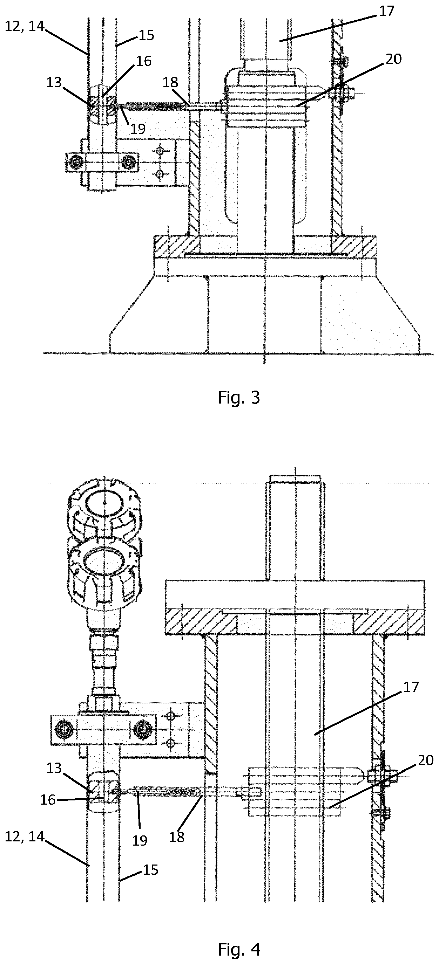

In den Figuren 2 bis 4 sind zwei unterschiedliche Positionen des Reflexionselements 13 in der Sonde 12 gezeigt. Bei der in Fig. 3 gezeigten Position handelt es sich um die in Fig. 2 ersichtliche untere Position des Stellring 20. Durch Längsbewegung der Antriebsstange 17 wird der Stellring 20 und damit das Reflexionselement 13 in die obere Position verfahren. Dadurch wird die Wegstrecke für die Radarsignale verkürzt. Die Änderung der Laufzeit der Radarsignale wird erfasst, sodass die Position des Reflexionselements 13 und damit auch die Position der Schieberplatte gemessen werden kann.

### Bezugszeichenliste

- 10: Bauteil
- 11: Messvorrichtung
- 12: Sonde
- 13: Reflexionselement
- 14: Außenrohr
- 15: Öffnung
- 16: Führungselement
- 17: Antriebsstange
- 18: Zeiger
- 19: Stift mit Feder
- 20: Stellring

## Patentansprüche

1. Messsystem für einen Schieber für industrielle Anlagen, insbesondere für Anlagen in den Bereichen Chemie, Petrochemie, Eisen- oder Stahlherstellung, Glasherstellung oder Energie- und Umwelttechnik, zur Messung der Position eines linear bewegbaren Bauteils des Schiebers,
**dadurch gekennzeichnet, dass**
eine Messvorrichtung (11) zum Senden und Empfangen von Radarsignalen mit einer Sonde (12) zum Führen der Radarsignale verbunden ist, wobei ein Reflexionselement (13) in der Sonde (12) geführt und mit dem linear bewegbaren Bauteil derart koppelbar ist, dass eine Position des Bauteils einer Position des Reflexionselements (13) in der Sonde (12) entspricht.

2. Messsystem nach Anspruch 1,
**dadurch gekennzeichnet, dass**
das Reflexionselement (13) zur Erzeugung eines elektrischen Kontaktes angepasst ist.

3. Messsystem nach Anspruch 1 oder 2,
**dadurch gekennzeichnet, dass**
die Sonde (12) ein Außenrohr (14) aufweist, in dem das Reflexionselement (13) geführt ist.

4. Messsystem nach Anspruch 3,
**dadurch gekennzeichnet, dass**
das Außenrohr (14) eine seitliche Öffnung (15), insbesondere einen Längsschlitz, aufweist, durch den das Reflexionselement (13) mit dem bewegbaren Bauteil koppelbar ist.

5. Messsystem nach Anspruch 3 oder 4,
**dadurch gekennzeichnet, dass**
die Sonde (12) ein Führungselement (16) für das Reflexionselement (13), insbesondere ein Innenrohr, aufweist, das im Außenrohr (14) angeordnet ist.

6. Messsystem nach Anspruch 4,
**dadurch gekennzeichnet, dass**
das Reflexionselement (13) das Führungselement (16) und das Außenrohr (14) zur Erzeugung des Kontaktes elektrisch verbindet.

7. Messsystem nach Anspruch 5 oder 6,
**dadurch gekennzeichnet, dass**
das Reflexionselement (13) einen Außendurchmesser, der dem Innendurchmesser des Außenrohres (14) entspricht, und einen Innendurchmesser aufweist, der dem Außendurchmesser des Führungselements (16) entspricht.

8. Schieber für industrielle Anlagen, insbesondere in den Bereichen Chemie, Petrochemie, Eisen- oder Stahlherstellung, Glasherstellung oder Energieund Umwelttechnik, mit einem Messsystem nach Anspruch 1, bei dem das bewegbare Bauteil eine Schieberplatte umfasst, die mit dem Reflexionselement (13) derart gekoppelt ist, dass eine Bewegung der Schieberplatte auf das Reflexionselement (13) übertragbar ist.

9. Schieber nach Anspruch 8,
**dadurch gekennzeichnet, dass**
die Schieberplatte eine Antriebsstange (17), insbesondere eine Antriebsspindel oder einen Antriebszylinder, aufweist, die mit dem Reflexionselement (13) verbunden ist.

10. Verfahren zum Messen der Position eines bewegbaren Bauteils eines Schiebers für industrielle Anlagen, insbesondere für Anlagen in den Bereichen Chemie, Petrochemie, Eisen- oder Stahlherstellung, Glasherstellung oder Energie- und Umwelttechnik, unter Verwendung eines Messsystems gemäß Anspruch 1, bei dem die Position des Bauteils nach dem Prinzip der Zeitbereichsreflektometrie gemessen wird.

## Claims

1. A measuring system for a slider for industrial plants, in particular for plants in the fields of chemistry, petrochemistry, iron or steel production, glass production or energy and environmental technology, for measuring the position of a linearly movable component of the slider,
**characterised in that**
a measuring device (11) for transmitting and receiving radar signals is connected to a probe (12) for guiding the radar signals, wherein a reflection element (13) is guided in the probe (12) and can be coupled to the linearly movable component in such a way that a position of the component corresponds to a position of the reflection element (13) in the probe (12).

2. The measuring system according to claim 1,
**characterised in that**
the reflection element (13) is adapted to generate an electrical contact.

3. The measuring system according to claim 1 or 2,
**characterised in that**
the probe (12) has an outer tube (14) in which the reflection element (13) is guided.

4. The measuring system according to claim 3,
**characterised in that**
the outer tube (14) has a lateral opening (15), in particular a slot, through which the reflection element (13) can be coupled to the movable component.

5. The measuring system according to claim 3 or 4,
**characterised in that**
the probe (12) has a guide element (16) for the reflection element (13), in particular an inner tube, which is arranged in the outer tube (14).

6. The measuring system according to claim 4,
**characterised in that**
the reflection element (13) electrically connects the guide element (16) and the outer tube (14) to generate the contact.

7. The measuring system according to claim 5 or 6,
**characterised in that**
the reflection element (13) has an outer diameter which corresponds to the inner diameter of the outer tube (14) and an inner diameter which corresponds to the outer diameter of the guide element (16).

8. A slider for industrial plants, in particular in the fields of chemistry, petrochemistry, iron or steel production, glass production or energy and environmental technology, with a measuring system according to claim 1, in which the movable component comprises a slider plate which is coupled to the reflection element (13) in such a way that a movement of the slider plate can be transmitted to the reflection element (13).

9. The slider according to claim 8,
**characterised in that**
the slider plate has a drive rod (17), in particular a drive spindle or a drive cylinder, which is connected to the reflection element (13).

10. A method for measuring the position of a movable component of a slider for industrial plants, in particular for plants in the fields of chemistry, petrochemistry, iron or steel production, glass production or energy and environmental technology, using a measuring system according to claim 1, in which the position of the component is measured according to the principle of time domain reflectometry.

## Revendications

1. Système de mesure pour une vanne destinée à des installations industrielles, notamment à des installations dans les secteurs de la chimie, de la pétrochimie, de la production de fer ou d'acier, de la production verrière ou de la technique énergétique et environnementale, pour mesurer la position d'un composant déplaçable de manière linéaire de la vanne,
**caractérisé en ce**
**qu'**un dispositif de mesure (11) destiné à émettre et à réceptionner des signaux radar est relié avec une sonde (12) pour guider les signaux radar, un élément réfléchissant (13) étant guidé dans la sonde (12) et susceptible d'être connecté avec le composant déplaçable de manière linéaire, de telle sorte qu'une position du composant corresponde à une position de l'élément réfléchissant (13) dans la sonde (12).

2. Système de mesure selon la revendication 1,
**caractérisé en ce que**
l'élément réfléchissant (13) est adapté pour générer un contact électrique.

3. Système de mesure selon la revendication 1 ou 2,
**caractérisé en ce que**
la sonde (12) comporte un tube extérieur (14) dans lequel l'élément réfléchissant (13) est guidé.

4. Système de mesure selon la revendication 3,
**caractérisé en ce que**
le tube extérieur (14) comporte un orifice (15) latéral, notamment une fente longitudinale, à travers laquelle l'élément réfléchissant (13) peut se connecter avec le composant déplaçable.

5. Système de mesure selon la revendication 3 ou 4,
**caractérisé en ce que**
la sonde (12) comporte un élément de guidage (16) pour l'élément réfléchissant (13), notamment un tube intérieur qui est placé dans le tube extérieur (14).

6. Système de mesure selon la revendication 4,
**caractérisé en ce que**
l'élément réfléchissant (13) relie électriquement l'élément de guidage (16) et le tube extérieur (14) pour créer le contact.

7. Système de mesure selon la revendication 5 ou 6,
**caractérisé en ce que**
l'élément réfléchissant (13) présente un diamètre extérieur, qui correspond au diamètre intérieur du tube extérieur (14), et un diamètre intérieur qui correspond au diamètre extérieur de l'élément de guidage (16).

8. Vanne, destinée à des installations industrielles, notamment à des installations dans les secteurs de la chimie, de la pétrochimie, de la production de fer ou d'acier, de la production verrière ou de la technique énergétique et environnementale, dotée d'un système de mesure selon la revendication 1, dans lequel le composant déplaçable comprend une plaque coulissante qui est connectée avec l'élément réfléchissant (13), de telle sorte qu'un déplacement de la plaque coulissante soit transmissible sur l'élément réfléchissant (13).

9. Vanne selon la revendication 8,
**caractérisé en ce que**
la plaque coulissante comporte une barre d'entraînement (17), notamment une broche d'entraînement ou un cylindre d'entraînement qui est reliée avec l'élément réfléchissant (13).

10. Procédé, destiné à mesurer la position d'un composant déplaçable d'une vanne pour des installations industrielles, notamment pour des installations dans les secteurs de la chimie, de la pétrochimie, de la production de fer ou d'acier, de la production verrière ou de la technique énergétique et environnementale, en utilisant un système de mesure selon la revendication 1, avec lequel la position du composant est mesurée selon le principe de la réflectométrie temporelle.
